# EUROPEAN PATENT APPLICATION

(11) **EP 2 650 796 A1**
(43) Date of publication of application: **16.10.2013**
(21) Application number: 11847238.0
(22) Date of filing: 09.12.2011
(51) Int. Cl.: G06F 13/00, H04M 1/00

(54) **COMMUNICATION TERMINAL COMPRISING IMAGE INFORMATION DISPLAY DEVICE, IMAGE INFORMATION DISPLAY METHOD, AND IMAGE INFORMATION DISPLAY PROGRAM**

(30) Priority: 09.12.2010 JP 2010274592
(71) Applicant: NEC Corporation, Tokyo 108-8001 (JP)
(72) Inventor: YONEMOCHI Yasuhiro, Tokyo 108-8001 (JP)
(74) Representative: Vossius & Partner
(86) International application number: PCT/JP2011/078572
(87) International publication number: WO 2012/077789

(57) **Abstract**

The degree of importance and the origin of a picture image attached to an e-mail can be known without a complicated operation. A communication terminal receives an e-mail and image data attached to the e-mail. "Mail information" which is information contained in the received e-mail and which is information for understanding a specific content of the e-mail, is stored. The mail information extracted from the e-mail to which the image data is attached, is added to the image data as metadata. A specific browsing folder storage unit for storing the image data to which the mail information is added as the metadata, is prepared. When the image data is browsed, the mail information added as the metadata can be also browsed, by referring to the image data stored in the specific browsing folder storage unit.

## Description

### {Technical Field}

The present invention relates to display of information related to image data typified by a photo.

### {Background Art}

Various acquisition paths of photo images in terminal devices typified by portable telephones or PHSs (Personal Handy-phone Systems) are provided. For example, photo images are obtained in various ways such as photographing of photo images by cameras mounted on the terminal devices, acquisition of photo images from WWW (World Wide Web), transfer of photo images in a form of being appended to electronic mails, and transmission of photo images from external devices according to communication schemes conforming to standards such as an infrared ray and BlueTooth (registered trademark).

In particular, chances to photograph images have increased due to performance enhancement of a camera function in recent years. In some cases, with an increase in the capacities of storage media, processing amounts of images have considerably increased.

In general, photo images transferred to portable telephones are managed in a state in which the photo images are appended to mails or in a state in which the photo images are stored in a dedicated image folder.

In such a situation, a technique for easily managing images has been suggested.

For example, PTL 1 discloses a technique for providing an imaging device and an information processing device capable of efficiently processing image file data by adding metadata to the photographed image file data and assigning, to the metadata, information regarding which is to be performed after the photographing of the image file data. Specifically, the image file data includes a header portion, a metadata portion, and a data portion in which photographed image data is stored. An Exif (Exchangeable image file format) library configured to compress the photographed image data is recorded in the header portion. A method of using the image file data is recorded in the metadata portion as text data. According to the technique disclosed in PTL 1, the image file data can be processed efficiently by configuring such a data structure (for example, see the paragraph [0013] and Fig. 5 of the specification of PTL 1).

### {Citation List}

### {Patent Literature}

{PTL 1} JP-A-2006-252206

### {Summary of Invention}

### {Technical Problem}

In the above-mentioned technique, however, particularly when an amount of data to be stored in a folder is large, the degree of importance or a background (a photographing place, a photographing date, an acquisition source, an acquisition path, and the like) of taking a photo image may be considered to be unclear. In the technique disclosed in PTL 1, the method of using the image file data is understood, but the degree of importance or the background of taking a photo image is not understood. Further, since photo images acquired in the form of being appended to electronic mails among the photo images are not photographed by intention of a user, it is difficult to particularly understand the background.

When a function of editing titles or the like of photo images is provided or photo images can be distributed into folders and managed in folders, it is possible to describe keywords or the like, which enables to insert the degree of importance or an acquisition path for the user. However, an operation is troublesome and it takes a considerable time particularly in a portable telephone.

Accordingly, an object of the present invention is to provide a communication terminal including an image information display device, an image information displaying method, and an image information displaying program capable of enabling the degree of importance of a photo image appended to an electronic mail or a background of taking the photo image to be understood without performing a troublesome operation.

### {Solution to Problem}

According to a first aspect of the present invention, there is provided a communication terminal comprising: a communication unit which receives an electronic mail and image data appended to the electronic mail; a mail information storage unit which stores mail information which is information included in the received electronic mail and is information used to comprehend specific contents of the electronic mail; a control unit which adds, as metadata added to the image data, the mail information extracted from the electronic mail to which the image data is appended; and a browsing specific folder storage unit which stores the image data to which the mail information is added as the metadata wherein, when the image data is browsed, the mail information added as the metadata can be also browsed referring to the image data stored in the browsing specific folder storage unit.

According to a second aspect of the present invention, there is provided an image information displaying method performed by a communication terminal capable of receiving an electronic mail. The image information displaying method includes:
receiving the electronic mail and image data appended to the electronic mail; preparing a mail information storage unit that stores mail information which is information included in the received electronic mail and is information used to comprehend specific contents of the electronic mail; adding, as metadata added to the image data, the mail information extracted from the electronic mail to which the image data is appended;
preparing a browsing specific folder storage unit which stores the image data to which the mail information is added as the metadata; and, when the image data is browsed,
enabling the mail information added as the metadata to be also browsed referring to the image data stored in the browsing specific folder storage unit.

According to a third aspect of the present invention, there is provided an image information displaying program causing a computer to function as a communication terminal including a communication unit which receives an electronic mail and image data appended to the electronic mail, a mail information storage unit which stores mail information which is information included in the received electronic mail and is information used to comprehend specific contents of the electronic mail, a control unit which adds, as metadata added to the image data, the mail information extracted from the electronic mail to which the image data is appended, and a browsing specific folder storage unit which stores the image data to which the mail information is added as the metadata wherein, when the image data is browsed, the mail information added as the metadata can be also browsed, referring to the image data stored in the browsing specific folder storage unit.

### {Advantages Effects of the Invention}

According to the present invention, it is possible to understand the degree of importance of a photo appended to an electronic mail or a background of taking the photo image without performing a troublesome operation owing to implanting information regarding the electronic mail as metadata into the photo image.

### {Brief Description of Drawings}

Fig. 1 illustrates a basic configuration of an entire embodiment of the present invention.
Fig. 2 illustrates a basic configuration of a communication terminal according to the embodiment of the present invention.
Fig. 3 illustrates a flowchart of a basic process when the communication terminal according to the embodiment of the present invention stores a photo image file.
Fig. 4 illustrates a display example of a received mail according to the embodiment of the present invention.
Fig. 5 illustrates implantation of mail information into the photo image file according to the embodiment of the present invention.
Fig. 6 illustrates a flowchart of a basic process when the photo image file is browsed with the communication terminal according to the embodiment of the present invention.
Figs. 7A-7D illustrate examples of display when the contents of the photo image file are browsed using the communication terminal according to the embodiment of the present invention.
Fig. 8 illustrates an example of modifying a basic configuration of a communication terminal according to an embodiment of the present invention.
Fig. 9 illustrates a flowchart of a basic process when a user selects whether to delete mail information with the communication terminal according to the embodiment of the present invention.

### {Reference Sings List}

100: communication terminal
101: mail information storage unit
102: control unit
103: communication unit
104: browsing specific folder storage unit
105: display unit
106: operation reception unit
107: interface
200-1, 200-2, 200-n: partner-side communication terminal
300: communication network
410: mail information
420: photo image file
421: photo image data area
422: Exif data area
500: recording medium

### {Description of Embodiments}

Next, an embodiment of the present invention will be described in detail with reference to the drawings.

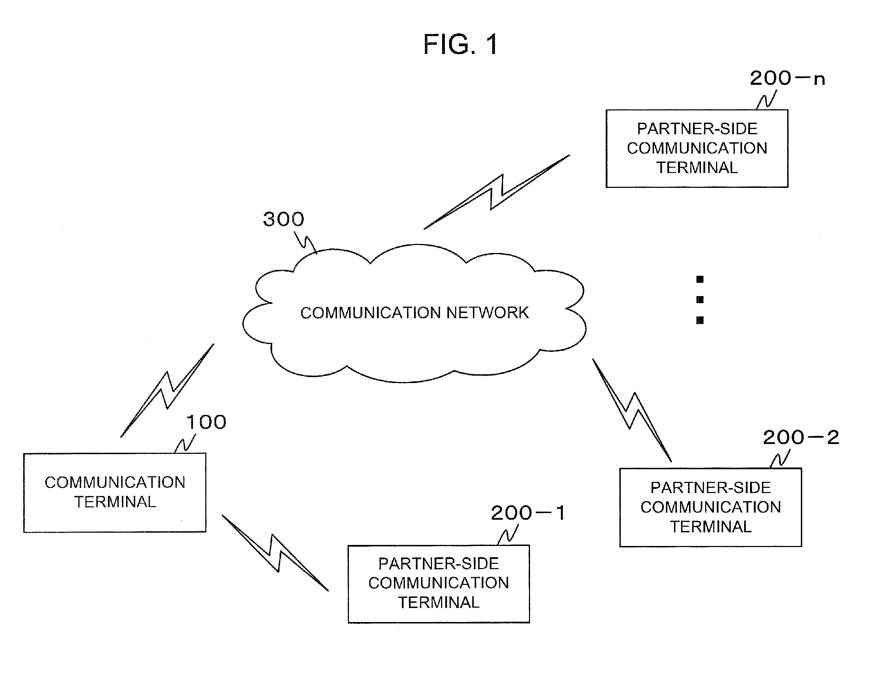

Fig. 1 is a diagram illustrating an overview according to an entire embodiment.

Referring to Fig. 1, a communication terminal 100, a partner-side communication terminal 200-1, a partner-side communication terminal 200-2, a partner-side communication terminal 200-n, and a communication network 300 are provided according to this embodiment.

The communication terminal 100 is a terminal device which is used directly by a user according to this embodiment and has a communication function. The communication terminal 100 is, for example, a portable telephone or a PHS. The portable telephone or the PHS is merely an example. Any electronic device may be used, as long as the electronic device is an electronic device capable of transmitting and receiving a mail. The detailed configuration of the communication terminal 100 will be described below.

The partner-side terminals 200-1 to 200-n are terminals which serve as partner sides with which the communication terminal 100 communicates. Since each partner-side terminal also has a communication function, the communication terminal 100 and each partner-side terminal can exchange electronic mails via the communication network 300 which includes a base station and so forth. Further, since the partner-side terminal 200-1 is currently located near the communication terminal 100, the partner-side terminal can perform communication without intervention of the communication network 300. This communication conforms to a standard such as IrDA or Bluetooth or is performed by connecting the terminals via a cable conforming to a USB (Universal Serial Bus) standard.

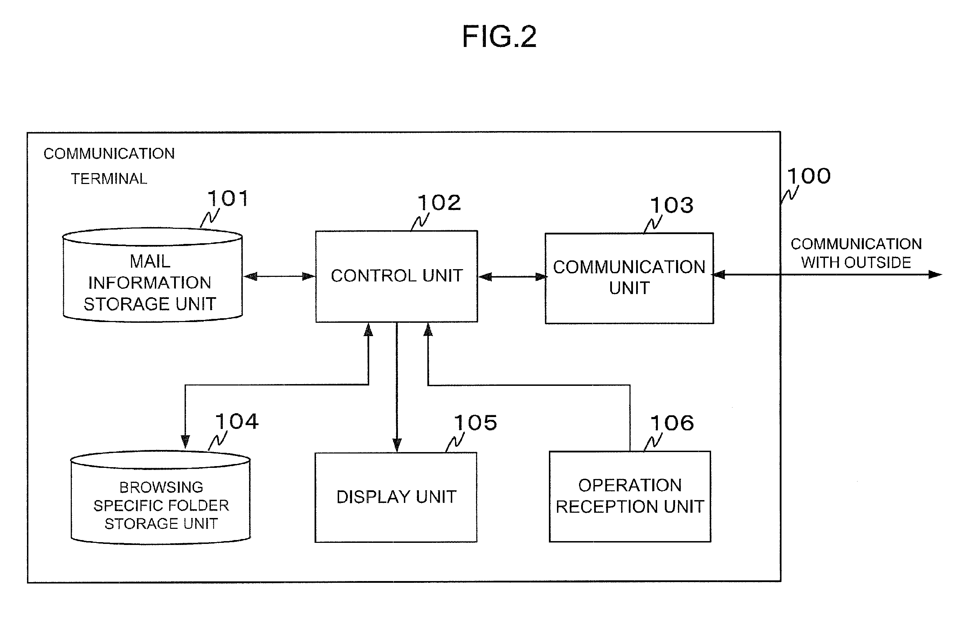

Next, the configuration of the communication terminal 100 will be described with reference to Fig. 2.

Referring to Fig. 2, the communication terminal 100 includes a mail information storage unit 101, a control unit 102, a communication unit 103, a browsing specific folder storage unit 104, a display unit 105, and an operation reception unit 106.

The mail information storage unit 101 is installed on a storage device and stores electronic mails previously received by the communication terminal 100. The mail information storage unit 101 reads and writes the electronic mails under operation by the control unit 102.

The control unit 102 is a unit which includes an arithmetic processing device and the storage device and controls the entire communication terminal 100. The storage device of the control unit 102 stores a program (software) used to control each unit illustrated in Fig. 2. When the arithmetic processing device which is hardware reads and executes the program, the communication terminal 100 operates. That is, the communication terminal 100 is realized when the software cooperates with hardware resources.

The communication unit 103 is a unit which communicates with the outside and is, for example, a modulator/demodulator appended with an antenna. The communication terminal 100 performs the communication with the outside using the communication unit 103. In the drawing, one communication unit 103 is illustrated, but the number of communication units 103 is not limited thereto. For example, a plurality of communication units 103 include a communication unit performing communication via the communication network 300 and a communication unit performing communication in conformity with IrDA, which may be provided for respective communication schemes.

The browsing specific folder storage unit 104 is installed on the storage device. The browsing specific folder storage unit 104 stores a photo image in which details (for example, a reception date and time, a sender, a title, and a body text) of a mail are stored as Exif data. The storage of the details of a mail will be described below.

The display unit 105 is a unit which displays information for a user. Specifically, an LCD (Liquid Crystal Display) or an Organic Electro-Luminescence display is used.

The operation reception unit 106 is a unit which receives an operation from the user. Specifically, a numerical keypad or the like is a representative input device. Further, the display unit 105 and the input reception unit 106 may be integrated in a display attached with a touch panel.

The units illustrated in Fig. 2 are merely units particularly relevant to this embodiments among the units included in the communication terminal 100. The communication terminal 100 may include non-illustrated units such as a power source used to bring a general portable telephone into operation. In the drawing, the mail information storage unit 101 and the browsing specific folder storage unit 104 are separated from each other, but may be mounted on a common storage device.

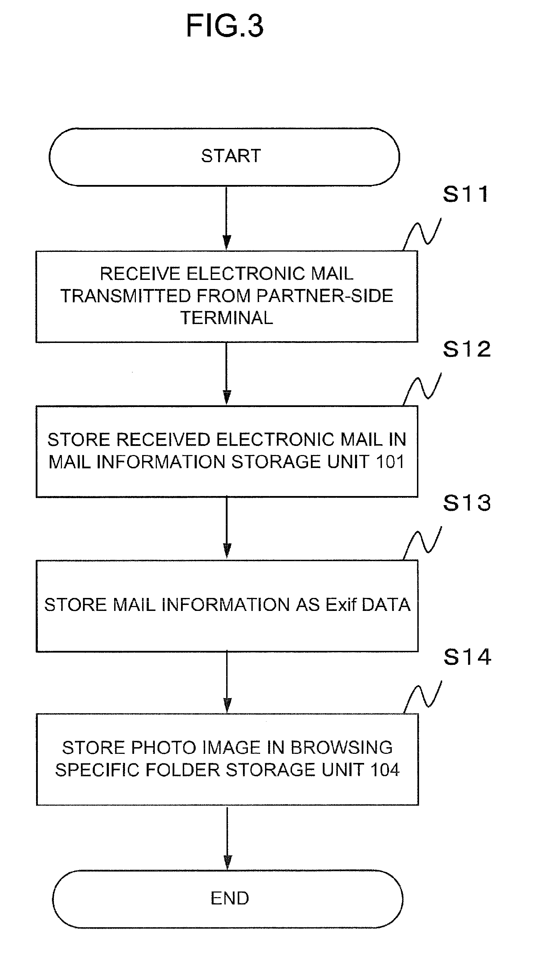

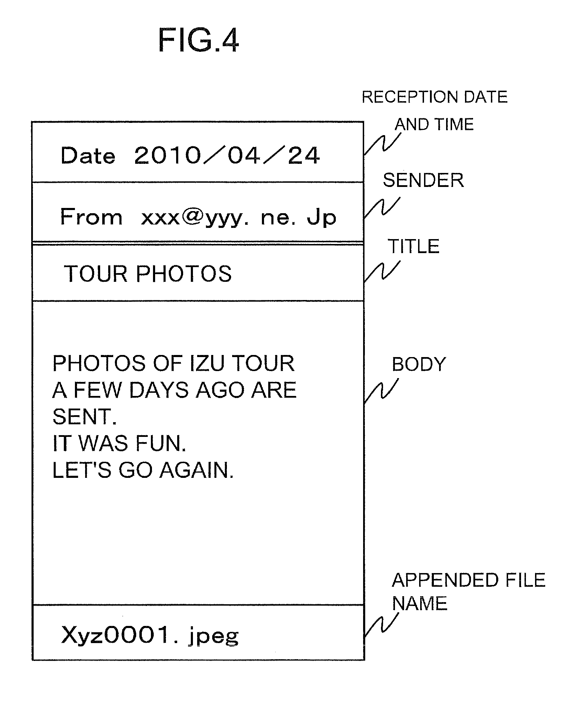

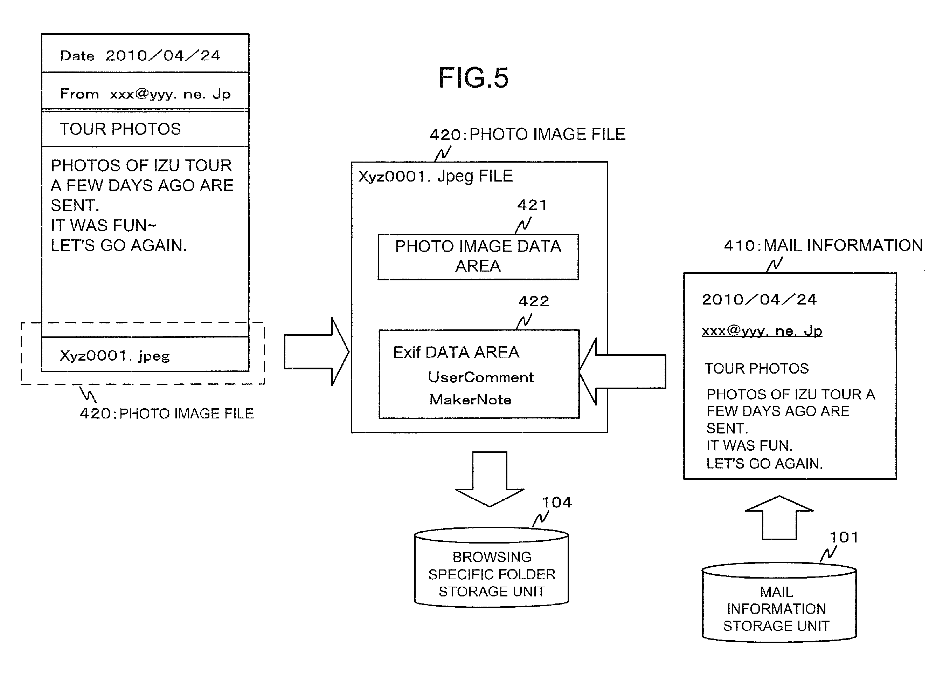

Next, a process of storing a photo image file executed in the communication terminal 100 will be described with reference to the flowchart in Fig. 3 and the images in Figs. 4 and 5.

First, the communication unit 103 of the communication terminal 100 receives an electronic mail transmitted from any of the partner-side terminals (step S11). Then, the received electronic mail is stored in the mail information storage unit 101 by the control unit 102 (step S12). A photo image is appended as image data to the electronic mail. Currently, the format of the photo image is assumed to conform to JPEG (Joint Photographic Experts Group). Metadata conforming to Exif is implanted into the photo image. Since JPEG and Exif are techniques which are well known to those skilled in the art, the detailed description will not be made here.

Here, in regard to the received electronic mail, an individual display configuration of a general received mail of a portable telephone is illustrated as an example in Fig. 4. The received electronic mail is stored in the mail information storage unit 101. The received electronic mail includes information (hereinafter, referred to as "mail information") such as a reception date and time, a sender, a title, a body text, and a display of an appended file, which are specific to the electronic mail and enables a use to understand the electronic mail. As the mail information, it is always necessary that all of the information are included, and some parts of the mail information may be omitted. Further, another piece of information may be included instead of parts of the mail information or in addition to the mail information.

Next, the control unit 102 stores the mail information in the Exif data area of the photo image appended to the received electronic mail (step S 13). A user's operation may be taken as an opportunity of performing Step S 13. In addition, Step 13 may be automatically performed whenever an electronic mail is received. In step S 13, for example, the mail information is stored in a sub-area of a makernote, a UserComent, or the like in the Exif data area. This will be described with reference to Fig. 5.

First, the control unit 102 extracts the mail information 410 from the mail information storage unit 101. Then, the mail information 410 is stored in the Exif data area 422 included in a photo image file 420. Here, there is already stored image data in the photo image data area 421.

Subsequently, the control unit 102 stores the photo image file 420 including the image data in the photo image data area 421 and the mail information in the Exif data area 422, to the browsing specific folder storage unit 104 (step S14). Thus, the process of storing the photo image file executed by the communication terminal 100 completes.

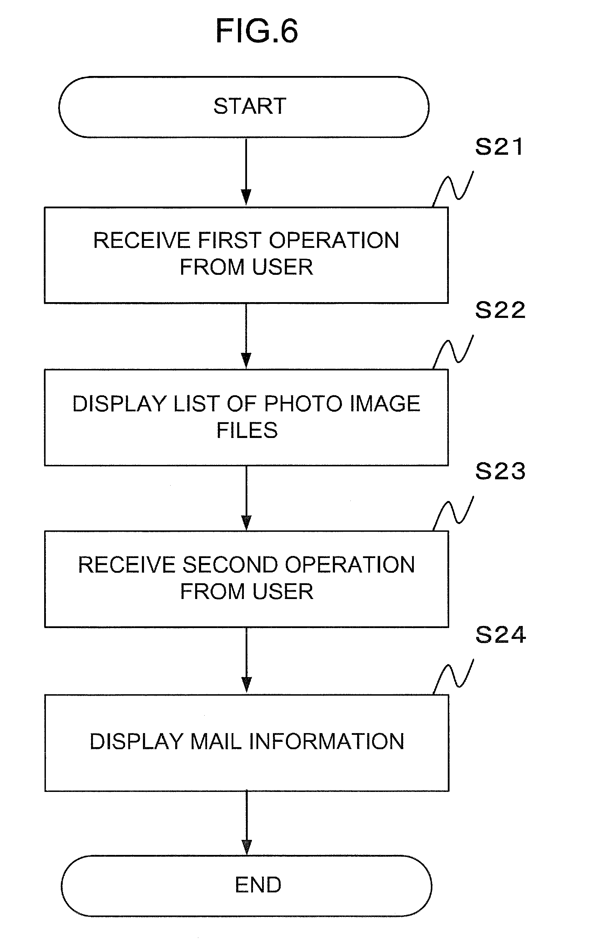

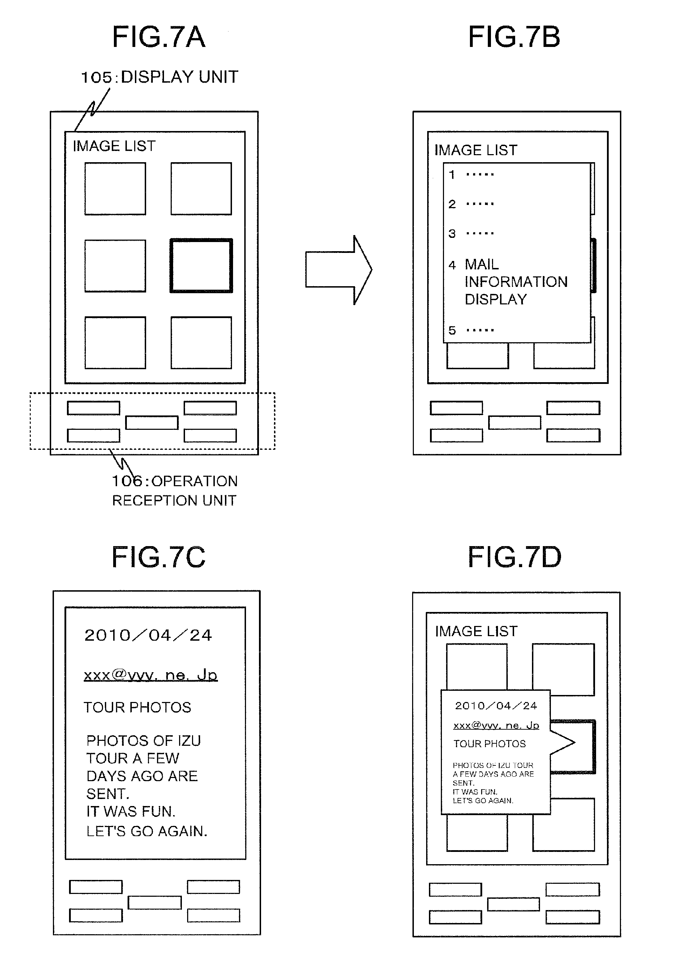

Next, a process of browsing contents of the photo image file 420 stored in the communication terminal 100 will be described with reference to the flowchart of Fig. 6 and the displays in Figs. 7A-7D.

First, the operation reception unit 106 receives a first operation from the user (step S21).

The control unit 102 detecting the reception of the first operation displays a list of the photo image files stored in the browsing specific folder storage unit 104 on the display unit 105 (step S22). As a display method, for example, thumbnail display is performed, in which arranged are thumbnails of photo image data in the photo image data areas of the photo image files.

Subsequently, the operation reception unit 106 receives a second operation from the user (step S23).

The control unit 102 detecting the reception of the second operation displays the mail information on the display unit 105 (step S24). A user who has viewed the mail information can confirm the background of taking the stored photos and the degree of importance of the stored photos.

Specifically, it is arbitrary what operation corresponds to the first operation, and what operation corresponds to the second operation. However, simple operations are preferable for the first and second operations. For example, pressing a function menu key may correspond to the first operation and pressing another menu function key may correspond to the second operation. For another example, pressing a predetermined key in the operation reception unit 106 or in a touch panel may correspond to the first operation and pressing another predetermined key in the operation reception unit 106 or in a touch panel may correspond to the second operation. For further example, a first gesture operation may correspond to the first operation and a second gesture operation may correspond to the second operation. Examples of screen display in the processes of steps S22 and S23 are illustrated in Figs. 7A-7D.

Fig. 7A shows a display at step S22 of displaying a list of the photo image files. In this example, the second operation includes two stages. Fig. 7B shows a display at the first stage of step 23. That is, Fig. 7B shows a display when a function menu is displayed. Fig. 7C and 7D show examples of a display at step S24 after the second stage of step S23 is executed, i.e., after "4: mail information display" is selected among the function menu. Concretely, Fig. 7C shows an example displaying the mail information on the entire display, and Fig. 7D shows an example displaying the mail information in a speech balloon.

Next, a process of transmitting the photo image files stored in the browsing specific folder storage unit 104 to an external device or the like will be described according to this embodiment.

Normally, the photo image files can be freely moved. Accordingly, in this embodiment, when the photo image files are output to the outside of the communication terminal 100, a function of deleting the mail information stored in the Exif data area is provided. Further, in addition to the case of outputting the photo images to the outside, when the photo image files are stored in the browsing specific folder storage unit 104 whether the mail information is also stored may be selected by the user. By doing so, it is possible to prevent the mail information which is individual information from leaking unintentionally.

A method of appending a photo image file to an electronic mail can be adopted as an example of a method of sending the photo image file to the outside of the communication terminal 100. Further, a method of uploading a photo image file to WWW can be adopted. Furthermore, a method of transmitting a photo image file by infrared communication conforming to IrDA can be adopted.

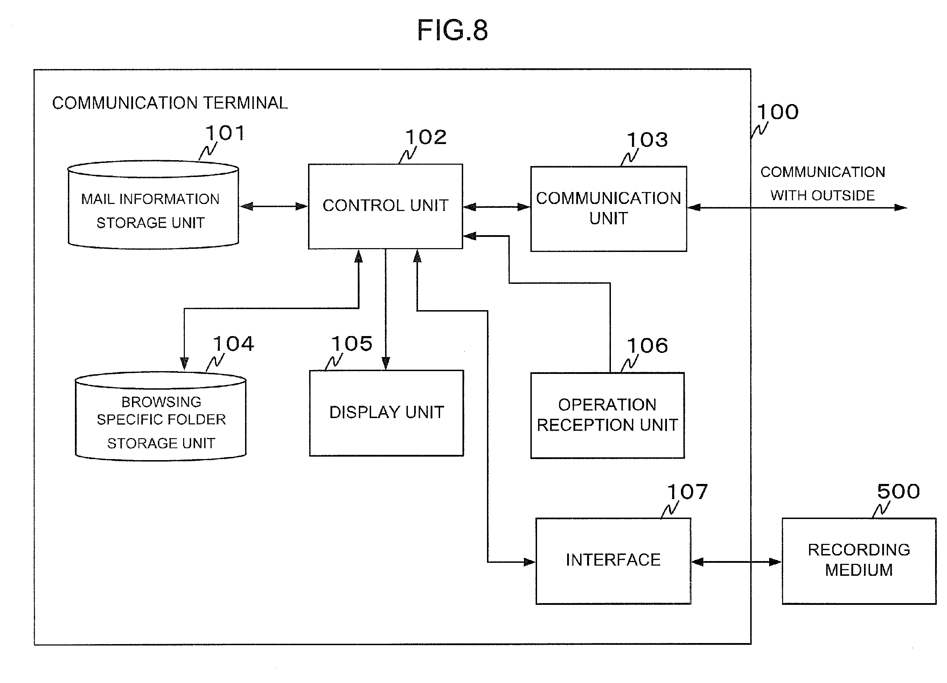

A method of storing a photo image file to a recording medium can be also adopted as the method of outputting the photo image file to the outside of the communication terminal 100. This will be described with reference to Fig. 8. As illustrated in Fig. 8, the communication terminal 100 further includes an interface 107 which couples the communication terminal 100 with a recording medium 500. A photo image file is stored to the recording medium 500. A memory card (for example, a micro-SD card) can be exemplified as the recording medium 500.

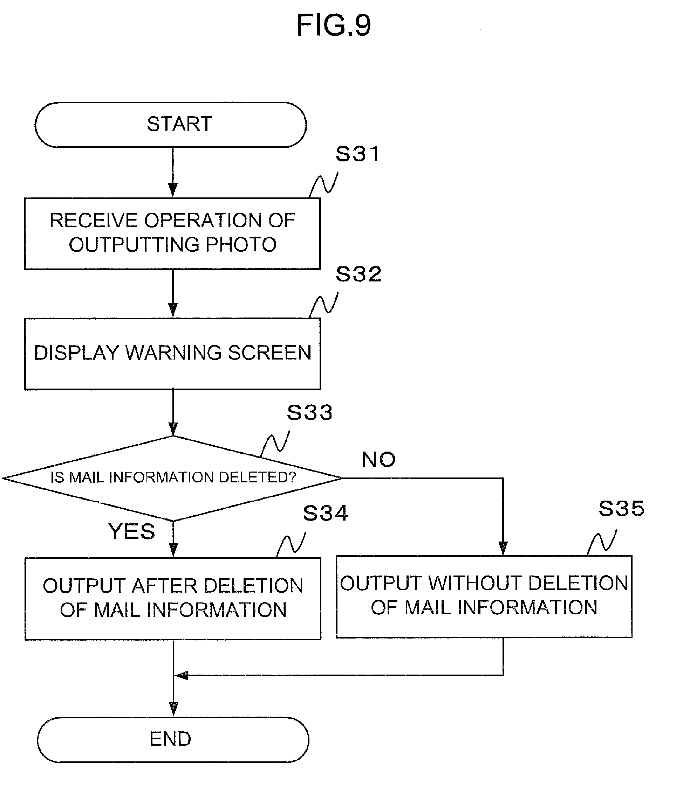

When a photo image file is output to the outside of the communication terminal 100, any method can be selected as a method of deleting the mail information. For example, a user can validate or invalidate a function as to whenever a photo image is output to the outside of the communication terminal 100, a function of deleting the mail information stored in the Exif data area operates. Further, this function may not be set in advance. Whenever a photo image is to be output to the outside of the communication terminal 100, a warning can be adopted to be displayed so that the user can select whether to delete the mail information before the output. This point will be described with reference to the flowchart of Fig. 9.

First, the operation reception unit 106 receives an operation of outputting a photo image file from the user (step S31).

The control unit 102 detecting the reception of the operation of outputting the photo image file displays a warning screen on the display unit 105 (step S32).

When an instruction to delete the mail information is received from the user (YES in step S33), the photo image file is output after deletion of the mail information (step S34). Conversely, when an instruction not to delete the mail information is received from the user (NO in step S33), the photo image file is output without deletion of the mail information (step S35).

Likewise, a user can validate or invalidate a function as to whenever a photo image file is stored to the browsing specific folder storage unit 104, a function of storing the mail information in the Exif data area operates. Further, this function may not be set in advance. Whenever a photo image is to be stored, a warning can be adopted to be displayed so that the user can select whether the mail information is added to the image data file which will be stored to the specific folder storage unit 104.

In the above-described embodiment of the present invention, the following abundant advantages can be obtained.

A first advantage is an advantage of recognizing the background of taking a photo image appended to a mail or the degree of importance of the photo image without performing a troublesome editing operation at the time of registration.

The reason is that, with regard to a photo image appended to a mail, the mail information can be stored as Exif data and "the body text + the date and time + the title + the sender" of the mail can be displayed and confirmed when a dedicated image folder is browsed.

A second advantage is an advantage of obtaining useful information since a comment can be given for an obtained photo image.

The reason is that display of "the date and time + the sender + the title + the mail body text" can be confirmed on a pop-up or a sub-screen by a simple method at the time of the browsing of the image folder, when the background of taking a photo is described in the mail body text.

A third advantage is an advantage of sending the mail information together in an existing structure without providing a special structure at the time of printing by PictBridge or at the time of exchange of photo data by IrDA or Bluetooth, when the photo image is stored in a memory card (for example, a micro-SD card).

The reason is that the mail information can be included as the metadata in the photo image file.

The communication terminal according to the embodiment of the present invention can be realized by hardware, and can be also realized when a computer reads a program configured to cause the computer to function as the communication terminal from a computer-readable recording medium and executes the program.

The method of displaying the information regarding the photo image according to the embodiment of the present invention can be realized by hardware, and can be also realized when a computer reads a program configured to cause the computer to perform the method from a computer-readable recording medium and executes the program.

The realization by the software, that is, the realization by the program means that a computer reads the program and executes the program.

The program can be stored on non-transitory computer-readable media of various types and can be supplied to a computer. The non-transitory computer-readable media include material tangible storage media of various types. Examples of the non-transitory computer-readable medium include a magnetic recording medium (for example, a flexible disk, a magnetic tape, and a hard disk drive), a magneto-optical recording medium (for example, a magneto-optical disk), a CD-ROM (Read-Only Memory), a CD-R, a CD-R/W, and a semiconductor memory (for example, a mask ROM, a PROM (Programmable ROM), an EPROM (Erasable PROM), a flash ROM, and a RAM (Random Access Memory)). The program may be supplied to a computer by transitory computer-readable media of various types. Examples of the transitory computer-readable medium include an electric signal, an optical signal, and an electromagnetic wave. The transitory computer-readable medium can supply the program to a computer via a wired communication path such as a wiring or an optical fiber or a wireless communication path.

The above-described embodiment is an embodiment very suitable for the present invention, but the scope of the present invention is not limited to the above-described embodiment and may be modified in various forms within the scope of the invention without departing from the gist of the invention.

For example, the metadata may conform to a format of metadata other than Exif. Further, the above-described photo image conforming to JPEG has been described, but the photo image may conform to TIFF (Tagged Image File Forma) or HD Photo other than JPEG. Furthermore, the metadata may be implanted into a moving image or the like as far as possible, instead of a photo image.

The present application is based upon and claims the benefit of the Paris Convention priority from the prior Japanese Patent Application No. 2010-274592, filed on December 9, 2010, the entire contents of which are incorporated herein by reference.

The representative embodiment of the present invention has been described in detail, but it should, of course, be understood that various changes, substitutions, and alternatives are made within the spirit and the scope of the invention defined in the claims without departing from the gist of the invention. Even when the claims are corrected in the application procedure, the inventors intend the scope to be equivalent to the claimed invention to be maintained.

A part or all of the above-described embodiments can be described as the following additional statements, but the invention is not limited thereto.

(Note 1) A communication terminal includes: a communication unit which receives an electronic mail and image data appended to the electronic mail; a mail information storage unit which stores mail information which is information included in the received electronic mail and is information used to comprehend specific contents of the electronic mail; a control unit which adds, as metadata added to the image data, the mail information extracted from the electronic mail to which the image data is appended; and a browsing specific folder storage unit which stores the image data to which the mail information is added as the metadata wherein, when the image data is browsed, the mail information added as the metadata can be also browsed referring to the image data stored in the browsing specific folder storage unit.

(Note 2) The communication terminal described in Note 1 may further include a first display unit which displays a list of the image data stored in the browsing specific folder storage unit, when a first operation is received from a user; and a second display unit which displays the mail information added as the metadata to given image data when a second operation which is an operation of selecting the given image data is received from the user after the display of the list.

(Note 3) In the communication terminal described in Note 1 or 2, when the image data stored in the browsing specific folder storage unit is sent to an outside of the communication terminal, the mail information added as the metadata may be deleted and the image data including no metadata may be sent to the outside.

(Note 4) In the communication terminal described in Note 3, the user may select whether to delete the mail information.

(Note 5) In the communication terminal described in any one of Notes 1 to 4, the user may select whether to store the mail information to the browsing specific folder storage unit as the metadata added to the image data.

(Note 6) In the communication terminal described in any one of Notes 1 to 5, the image data conforms to Exif (Exchangeable image file format) and the mail information may be added as data conforming to the Exif.

(Note 7) In the communication terminal described in any one of Notes 1 to 6, one of or a combination of a reception date and time, a sender, a title, and a body text of the electronic mail may be included in the mail information.

(Note 8) An image information displaying method performed by a communication terminal capable of receiving an electronic mail includes: receiving the electronic mail and image data appended to the electronic mail; preparing a mail information storage unit which stores mail information which is information included in the received electronic mail and is information used to comprehend specific contents of the electronic mail; adding, as metadata added to the image data, the mail information extracted from the electronic mail to which the image data is appended; preparing a browsing specific folder storage unit which stores the image data to which the mail information is added as the metadata; and, when the image data is browsed, enabling the mail information added as the metadata to be also browsed referring to the image data stored in the browsing specific folder storage unit.

(Note 9) The image information display method described in Note 8 may further include: displaying a list of the image data stored in the browsing specific folder storage unit when a first operation is received from a user; and displaying the mail information added as the metadata to given image data when a second operation which is an operation of selecting the given image data is received from the user after the display of the list.

(Note 10) In the image information display method described in Note 8 or 9, when the image data stored in the browsing specific folder storage unit is sent to an outside of the communication terminal, the mail information added as the metadata may be deleted and the image data including no metadata may be sent to the outside.

(Note 11) In the image information display method described in Note 10, the user may select whether to delete the mail information.

(Note 12) In the image information display method described in any one of Notes 8 to 11, the use may select whether to store the mail information to the browsing specific folder storage unit as the metadata to the image data.

(Note 13) In the image information display method described in any one of Notes 8 to 12, the image data may conform to Exif (Exchangeable image file format) and the mail information may be added as data conforming to the Exif.

(Note 14) In the image information display method described in any one of Notes 8 to 13, one of or a combination of a reception date and time, a sender, a title, and a body text of the electronic mail may be included in the mail information.

(Note 15) An image information displaying program causing a computer to function as a communication terminal, the communication terminal including a communication unit which receives an electronic mail and image data appended to the electronic mail, a mail information storage unit which stores mail information which is information included in the received electronic mail and is information used to comprehend specific contents of the electronic mail, a control unit which adds, as metadata added to the image data, the mail information extracted from the electronic mail to which the image data is appended, and a browsing specific folder storage unit which stores the image data to which the mail information is added as the metadata wherein, when the image data is browsed, the mail information added as the metadata can be also browsed, referring to the image data stored in the browsing specific folder storage unit.

(Note 16) In the image information displaying program described in Note 15, the communication terminal may further include a first display unit which displays a list of the image data stored in the browsing specific folder storage unit when a first operation is received from a user, and a second display unit which displays the mail information added as the metadata to given image data, when a second operation of selecting the given image data is received from the user after the display of the list.

(Note 17) In the image information displaying program described in Note 15 or 16, when the image data stored in the browsing specific folder storage unit is sent to an outside of the communication terminal, the mail information added as the metadata may be deleted and the image data including no metadata may be sent to the outside.

(Note 18) In the image information displaying program described in Note 17, the user may select whether to delete the mail information.

(Note 19) In the image information displaying program described in any one of Notes 15 to 18, the user may select whether to store the mail information to the browsing specific folder storage unit as the metadata added to the image data.

(Note 20) In the image information displaying program described in any one of Notes 15 to 19, the image data conforms to Exif (Exchangeable image file format) and the mail information may be added as data conforming to the Exif.

(Note 21) In the image information displaying program described in any one of Notes 15 to 20, one of or a combination of a reception date and time, a sender, a title, and a body text of the electronic mail may be included in the mail information.

## Claims

1. A communication terminal comprising:
a communication unit which receives an electronic mail and image data appended to the electronic mail;
a mail information storage unit which stores mail information which is information included in the received electronic mail and is information used to comprehend specific contents of the electronic mail;
a control unit which adds, as metadata added to the image data, the mail information extracted from the electronic mail to which the image data is appended; and
a browsing specific folder storage unit which stores the image data to which the mail information is added as the metadata,
wherein, when the image data is browsed, the mail information added as the metadata can be also browsed referring to the image data stored in the browsing specific folder storage unit.

2. The communication terminal according to claim 1, further comprising:
a first display unit which displays a list of the image data stored in the browsing specific folder storage unit when a first operation is received from a user; and
a second display unit which displays the mail information added as the metadata to given image data when a second operation which is an operation of selecting the given image data is received from the user after the display of the list.

3. The communication terminal according to claim 1 or 2, wherein, when the image data stored in the browsing specific folder storage unit is sent to an outside of the communication terminal, the mail information added as the metadata is deleted and the image data including no metadata is sent to the outside.

4. The communication terminal according to claim 3, wherein the user selects whether to delete the mail information.

5. The communication terminal according to any one of claims 1 to 4, wherein the user selects whether to store the mail information to the browsing specific folder storage unit as the metadata added to the image data.

6. The communication terminal according to any one of claims 1 to 5, wherein the image data conforms to Exif (Exchangeable image file format) and the mail information is added as data conforming to the Exif.

7. The communication terminal according to any one of claims 1 to 6, wherein one of or a combination of a reception date and time, a sender, a title, and a body text of the electronic mail is included in the mail information.

8. An image information displaying method performed by a communication terminal capable of receiving an electronic mail, the image information displaying method comprising:
receiving the electronic mail and image data appended to the electronic mail;
preparing a mail information storage unit which stores mail information which is information included in the received electronic mail and is information used to comprehend specific contents of the electronic mail;
adding, as metadata added to the image data, the mail information extracted from the electronic mail to which the image data is appended;
preparing a browsing specific folder storage unit which stores the image data to which the mail information is added as the metadata; and
when the image data is browsed, enabling the mail information added as the metadata to be also browsed referring to the image data stored in the browsing specific folder storage unit.

9. The image information displaying method according to claim 8, further comprising:
displaying a list of the image data stored in the browsing specific folder storage unit when a first operation is received from a user; and
displaying the mail information added as the metadata to given image data when a second operation which is an operation of selecting the given image data is received from the user after the display of the list.

10. The image information displaying method according to claim 8 or 9, wherein, when the image data stored in the browsing specific folder storage unit is sent to an outside of the communication terminal, the mail information added as the metadata is deleted and the image data including no metadata is sent to the outside.

11. The image information displaying method according to claim 10, wherein the user selects whether to delete the mail information.

12. The image information displaying method according to any one of claims 8 to 11, wherein the user selects whether to store the mail information to the browsing specific folder storage unit as the metadata added to the image data.

13. The image information displaying method according to any one of claims 8 to 12, wherein the image data conforms to Exif (Exchangeable image file format) and the mail information is added as data conforming to the Exif.

14. The image information displaying method according to any one of claims 8 to 13, wherein one of or a combination of a reception date and time, a sender, a title, and a body text of the electronic mail is included in the mail information.

15. An image information displaying program causing a computer to function as a communication terminal,
wherein the communication terminal includes:
a communication unit which receives an electronic mail and image data appended to the electronic mail,
a mail information storage unit which stores mail information which is information included in the received electronic mail and is information used to comprehend specific contents of the electronic mail,
a control unit which adds, as metadata added to the image data, the mail information extracted from the electronic mail to which the image data is appended, and
a browsing specific folder storage unit which stores the image data to which the mail information is added as the metadata,
wherein, when the image data is browsed, , the mail information added as the metadata can be also browsed referring to the image data stored in the browsing specific folder storage unit.

16. The image information displaying program according to claim 15, wherein
the communication terminal further includes
a first display unit which displays a list of the image data stored in the browsing specific folder storage unit when a first operation is received from a user, and
a second display unit which displays the mail information added as the metadata to given image data when a second operation of selecting the given image data is received from the user after the display of the list.

17. The image information displaying program according to claim 15 or 16,
wherein, when the image data stored in the browsing specific folder storage unit is sent to an outside of the communication terminal, the mail information added as the metadata is deleted and the image data including no metadata is sent to the outside.

18. The image information displaying program according to claim 17, wherein the user selects whether to delete the mail information.

19. The image information displaying program according to any one of claims 15 to 18, wherein the user selects whether to store the mail information to the browsing specific folder storage unit as the metadata added to the image data.

20. The image information displaying program according to any one of claims 15 to 19, wherein the image data conforms to Exif (Exchangeable image file format) and the mail information is added as data conforming to the Exif.

21. The image information displaying program according to any one of claims 15 to 20, wherein one of or a combination of a reception date and time, a sender, a title, and a body text of the electronic mail is included in the mail information.
